(19) Europäisches Patentamt
European Patent Office
Office européen des brevets

(11) **EP 1 756 504 B1**

(12) **FASCICULE DE BREVET EUROPEEN**

(45) Date de publication et mention de la délivrance du brevet:
**19.04.2017 Bulletin 2017/16**

(21) Numéro de dépôt: **05766638.0**

(22) Date de dépôt: **31.05.2005**

(51) Int Cl.:
*F28C 1/02* (2006.01)        *F28F 25/02* (2006.01)
*F28F 25/10* (2006.01)

(86) Numéro de dépôt international:
**PCT/FR2005/050398**

(87) Numéro de publication internationale:
**WO 2005/124253 (29.12.2005 Gazette 2005/52)**

(54) **Tour de refroidissement**

Kühlturm

Cooling tower

(84) Etats contractants désignés:
**AT BE BG CH CY CZ DE DK EE ES FI FR GB GR HU IE IS IT LI LT LU MC NL PL PT RO SE SI SK TR**

(30) Priorité: **08.06.2004 FR 0451128**

(43) Date de publication de la demande:
**28.02.2007 Bulletin 2007/09**

(73) Titulaire: **Climespace**
**75012 Paris (FR)**

(72) Inventeurs:
• **CLODIC, Denis**
**F-75006 PARIS (FR)**
• **ZOUGHAIB, Assaad**
**F-78120 RAMBOUILLET (FR)**
• **MERCHAT, Michèle**
**F-94300 VINCENNES (FR)**
• **FASSI, Larbi**
**F-92380 GARCHES (FR)**

(74) Mandataire: **Cornuejols, Georges et al**
**Cassiopi**
**230 Avenue de l'Aube Rouge**
**34170 Castelnau-le-Lez (FR)**

(56) Documents cités:
**FR-A- 2 279 057    FR-A- 2 431 670**

• **DATABASE COMPENDEX [Online] ENGINEERING INFORMATION, INC., NEW YORK, NY, US; RAGLAND W A ET AL: "Two-phase flow at the flooding point in an annulus" XP002348286 Database accession no. EIX89050284129 -& EXPER THERM FLUID SCI JAN 1989, vol. 2, no. 1, janvier 1989 (1989-01), pages 7-16, XP002348280**
• **DATABASE COMPENDEX [Online] ENGINEERING INFORMATION, INC., NEW YORK, NY, US; TSO C P ET AL: "AIR-WATER COUNTERCURRENT FLOW LIMITS IN A VERTICAL PIPE FILLED WITH SPHERES" XP002348287 Database accession no. EIX88090123424 -& EXPER THERM FLUID SCI APR 1988, vol. 1, no. 2, avril 1988 (1988-04), pages 207-219, XP002348281**

EP 1 756 504 B1

## Description

L'invention concerne une tour de refroidissement. Les tours aéroréfrigérantes sont des dispositifs compacts et efficaces énergétiquement pour rejeter de la chaleur dans l'air ambiant. Le processus physique essentiel est celui de l'évaporation de l'eau dans de l'air qui est plus ou moins loin de ses conditions de saturation en humidité suivant les conditions climatiques locales. Comme la chaleur latente de l'eau est très élevée, de l'ordre de 2500 kJ / kg à la pression atmosphérique, il faut un faible débit d'évaporation pour refroidir le débit d'eau liquide circulant. Il est connu depuis 1976 que les tours aéroréfrigérantes peuvent être à l'origine de la vectorisation de bactéries pathogènes : les légionnelles. Cette vectorisation s'effectue par les aérosols liquides d'une dimension bien définie entre 0,5 et 6 micromètres, soit 0,5 à 6 $10^{-6}$ m. L'objet de l'invention est de définir un système qui permettent d'éliminer ces aérosols ou micro-gouttelettes.

## Etat de l'art

Les tours aéroréfrigérantes sont équipées de dispositifs divers pour limiter les entraînements de gouttelettes comme des pare-gouttelettes présentés par exemple dans le brevet US 3 731 461 ou le brevet UK 2 206 683 mais les moyens de mesures pour mesurer la taille des aérosols et leur nombre sont récents et peu connus ou, pour certains d'entre eux, difficiles de mise en oeuvre. Seuls des dispositifs récents utilisant la diffraction à 90° d'une lumière blanche permettent à la fois de compter les populations de gouttelettes et leur taille en les plaçant à la sortie même des tours de refroidissement. Les constructeurs communiquent le niveau d'entraînement en pourcentage du débit d'eau circulant ; des valeurs typiques sont de l'ordre de 0,01% jusqu'à 0,06 %, ce qui semble faible mais, une fois référé au débit circulant, ce sont plusieurs dizaines de litres par heure qui sont émis sous forme d'aérosols de quelques microns, ce qui représente des valeurs supérieures de plusieurs milliards de micro-gouttelettes par heure. De tels nombres ont été mesurés à la sortie de tours aéroréfrigérantes munies de système pare-gouttelettes ; ces dispositifs ne sont pas efficaces pour arrêter les micro-gouttelettes dont la taille se situe entre 0,5 et 6 micromètres. La présente invention vise donc à traiter le problème à la source en empêchant la formation même des aérosols liquides. Pour cela, il faut développer une nouvelle conception globale des circulations d'air et d'eau dans les tours aéroréfrigérantes.

Une tour aéroréfrigérante est principalement composée d'un système de répartition d'eau, d'un packing qui est constitué par les surfaces d'échange de mise en contact de l'air et de l'eau, d'un système de ventilation et d'un système de récupération de l'eau.

Les dispositifs usuels ou améliorés, comme présentés dans le brevet US 4579692 ou WO 99/ 30096 ou WO 94/21366 pour la répartition d'eau sur le packing, sont des pulvérisateurs, des rampes tournantes, des systèmes à débordement qui déversent l'eau sur le packing. Tous ces systèmes présentent le défaut majeur d'être des générateurs d'aérosols avant même que l'eau s'écoule sur le packing. De plus, intéressé uniquement par l'accroissement de la surface de contact air-eau, certains brevets comme US 2 517 639 ou US 3 652 066 revendiquent même l'accroissement de la formation du nombre de gouttelettes par des dispositifs variés pour accroître la surface de contact air/eau.

## Description de l'invention

Pour empêcher la formation d'aérosols liquides ou micro-gouttelettes pour des circulations d'air et d'eau soit à courants croisés, soit à contre-courants dans des tours de refroidissement, il faut empêcher cette formation d'aérosols liquides sur trois portions successives de l'écoulement d'eau en rapport avec l'écoulement de l'air : lors de la distribution de l'eau, lors de l'écoulement de l'eau sur la surface d'échange et lors de la récupération de l'eau à l'extrémité de la surface d'échange de la surface d'échange ou "packing". Le terme packing est ici pris dans son sens le plus général de surface solide permettant la mise en contact efficace de l'eau et de l'air.

Pour cela, il faut créer un film d'eau collé à la paroi du packing, en contrôler l'épaisseur et la bonne répartition sur la surface, ce qui constitue la première étape d'empêchement de formation des micro-gouttelettes ; puis il faut contrôler le régime d'écoulement de l'eau sur la surface d'échange pour que la hauteur des vaguelettes qui se forment sur cet écoulement à frontière libre soit suffisamment basse pour que les vaguelettes ne soient pas écrêtées par les débits d'air. Enfin il faut que les films d'eau soient récupérés sans qu'ils soient traversés par les débits d'air.

La répartition initiale de l'eau sur la surface est essentielle pour ne pas créer d'aérosols de tailles variables lors de cette répartition. Le procédé qui a été élaboré à titre de réalisation est un procédé par débordement à épaisseur contrôlée et à film collé sur la paroi.

Une fois le film d'eau d'épaisseur homogène réparti sur toute la largeur de la plaque, l'inclinaison de la plaque, son état de surface, ses propriétés hydrophiles ou, au contraire, hydrophobes, vont déterminer, en conjonction avec le débit d'air qui circule à co-courant ou à courants croisés, la vitesse de l'eau sur la plaque. En effet l'eau circule par gravité et donc son mouvement est uniformément accéléré par la pesanteur. Il faut contrôler cette accélération pour limiter l'accroissement de la vitesse de l'eau sur la surface qui entraîne la formation de vaguelettes. Le critère de Wallis permet de calculer les seuils de vitesses relatives de l'air et de l'eau amenant à l'arrachement de gouttelettes par la relation

$$U^*_G + m\sqrt{U^*_L} = C$$ où U* est la vitesse adimensionnelle, les indices G et L désignant respectivement l'air et l'eau et m est un paramètre, déterminé empiriquement, qui dépend de l'état de surface des surfaces d'échange. La valeur de C permet de savoir si les conditions d'arrachements de gouttelettes sont remplies ou non. D'autres calculs plus sophistiqués prenant en compte, la tension superficielle de l'eau, la gravité, la longueur d'onde des vaguelettes, certaines propriétés thermophysiques de l'air et de l'eau et bien sûr leurs vitesses, aboutissent de la même manière à définir les conditions d'arrachement de gouttelettes. Ces calculs et des dispositifs expérimentaux ont permis de vérifier ce qui est à la base de l'invention.

L'invention concerne une tour de refroidissement dans lequel l'alimentation s'effectue à l'aide d'une boîte à eau anti-remous et d'un moyen tel qu'une lèvre de distribution, et dans lequel on engendre des films d'eau collés sur les surfaces d'échanges afin d'empêcher la formation d'aérosols liquides lors de l'échange entre l'air et l'eau sur ces surfaces.

Les surfaces d'échanges, ou plaques, sont inclinées d'un angle, compris en 2° et 10°, par rapport à la direction horizontale, dont la valeur est telle qu'on contrôle l'accélération du film d'eau sur les surfaces d'échanges afin que la vitesse du film collé sur ces surfaces empêche l'écrêtement des vaguelettes par le flux d'air à contre-courants ou à courants croisés.

Selon une réalisation on prévoit des buses d'air de soufflage comportant des gouttières inclinées, par exemple d'un angle de 1° à 2°, dans un plan perpendiculaire à l'écoulement du film d'eau afin de recueillir ce dernier, sans qu'il soit brisé par le débit d'air, empêchant ainsi la formation de gouttelettes lors de la récupération des films d'eau après qu'ils aient été refroidis par auto-évaporation dans les flux d'air.

Pour garantir une épaisseur constante du film d'eau sur les plaques ou surfaces d'échange, dans une réalisation, le nombre de surfaces alimentées en eau est fonction du débit d'eau. Dans ce cas les surfaces alimentées sont, par exemple, soumises chacune au même débit.

Selon une réalisation, la distribution d'eau est réalisée par débordement, par un moyen de distribution assurant une répartition homogène du film d'eau sur toute la largeur de la surface d'échange.

Dans une réalisation, le système de distribution d'eau comprend une boite à eau anti-remous. La surface d'échange, ou surface d'échange, ou plaque, est inclinée d'un angle, compris en 2° et 10°, par rapport à la direction horizontale, dont la valeur est telle que la vitesse relative de l'écoulement d'eau par rapport au flux d'air reste en deçà d'une valeur seuil à partir de laquelle il y a création d'aérosols.

Selon une réalisation, la vitesse maximum $U_L^*$ du film d'eau est déterminée par la formule :

$$U_G^* + m\sqrt{U_L^*} = C,$$

formule dans laquelle $U_G^*$ est la vitesse du flux d'air, m est un paramètre fonction de la surface d'échange, et C est la valeur du critère de Wallis au-delà de laquelle il y a création d'aérosols.

Le flux d'air est par exemple généré par un système de distribution d'air situé à l'une des extrémités de la surface d'échange.

Dans un mode de réalisation, on prévoit des gouttières inclinées, par exemple d'un angle de 1° à 2°, dans un plan perpendiculaire à l'écoulement du film d'eau afin de recueillir ce dernier, sans que ce film soit en contact avec le flux d'air, empêchant ainsi la formation de gouttelettes lors de la récupération des films d'eau après qu'ils aient été refroidis par auto-évaporation dans les flux d'air.

Dans un mode de réalisation, pour garantir une épaisseur constante du film d'eau sur les plaques ou surfaces d'échange, le nombre de surfaces alimentées en eau est fonction du débit d'eau.

Dans ce cas les surfaces alimentées sont par exemple soumises chacune au même débit.

L'écoulement du film d'eau est de préférence laminaire.

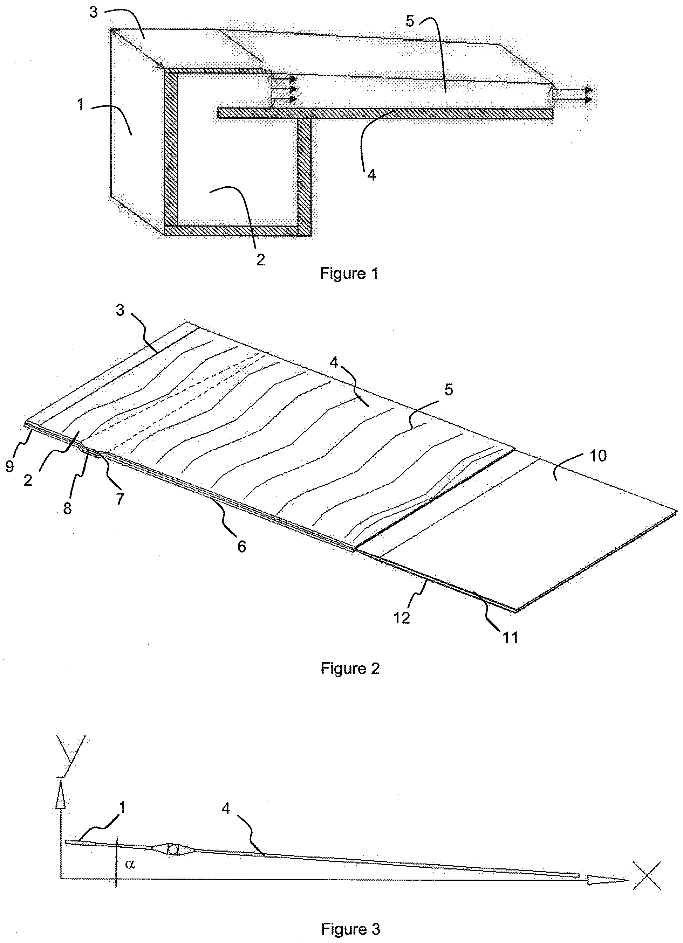

D'autres caractéristiques et avantages de l'invention apparaîtront avec la description de certains de ses modes de réalisation, celle-ci étant effectuée en se référant aux figures ci-annexées sur lesquelles les figures 1 à 7 sont des schémas illustrant des modes de réalisation de l'invention.

**Description d'un mode de réalisation**

Cette description détaillée à l'aide des figures va permettre de mieux comprendre l'invention. La figure 1 donne une représentation schématique d'une coupe du système de distribution d'eau 1 qui va être utilisé pour l'alimentation de chaque surface d'échange élémentaire du packing comme la surface 4. La boîte à eau anti-remous 2 reçoit une fraction du débit total d'eau, ses dimensions et sa structure permettent de disposer d'un écoulement calme et correctement réparti sur toute la largeur de la plaque élémentaire du packing. L'eau sort de cette boîte à eau par une lèvre de distribution 3, dont l'ouverture et la longueur permettent de contrôler précisément l'épaisseur du film d'eau 5, qui se situe entre quelques dixièmes de millimètre et 1 millimètre. L'association de la boîte à eau 2 et de la lèvre de distribution 3 permet de répartir la fraction voulue du débit d'eau sur la surface d'échange 4, sur toute sa largeur et avec une épaisseur définie.

La figure 2 donne une vue plus globale d'une mise en oeuvre possible avec une vue de 2 plaques d'échange superposées, 4 et 6, avec les alimentations respectives 7 et 8 des boîtes à eau 2 et 9 qui, dans cette mise en oeuvre, sont intégrées dans l'épaisseur des plaques d'échange 4 et 6. Les plaques d'échange 4 et 6 ont typiquement une épaisseur de l'ordre de 5 mm, les boîtes à eau 2 et 9 ont alors une épaisseur de l'ordre de 3 mm et le film d'eau est déversé avec une épaisseur contrôlée sur la plaque 4 par la lèvre de distribution 3. La figure 2 montre aussi une des conceptions possibles de la forme de la boîte à eau 2 qui présente une section progressivement réduite dans le sens de l'alimentation de l'eau 7 pour assurer une distribution initiale également répartie du débit d'eau sur toute la largeur de la plaque 4. L'association des boîtes à eau et des lèvres de distribution sur toutes les plaques d'échange du packing assure l'alimentation de l'eau par un film collé à la paroi d'échange. Ce système de distribution garantit l'absence de formation d'aérosols lors de la distribution d'eau.

La figure 2 montre aussi un élément de distribution d'air 10 formé de 2 plaques minces 11 et 12 qui se terminent par une forme conique pour diriger le débit d'air parallèlement au débit d'eau et à contre-courants, ici sur la plaque 6. Une alimentation à courants croisés de l'air est aussi possible et aurait la même structure de distribution de l'eau par boîte à eau et lèvre de distribution et de l'air par buses intercalées mais, comme cela est bien connu, l'alimentation à courants croisés présente une moindre efficacité énergétique. Avantageusement, des structures non représentées, en nid d'abeille, peuvent être insérées dans l'entre-deux des plaques distributrices formant le système de distribution d'air pour obtenir un flux d'air essentiellement unidirectionnel et sans tourbillons.

Dans un repère orthonormé x,y,z où x est l'axe horizontal dans la direction de l'écoulement d'eau sur la plaque, y l'axe vertical et z l'axe qui forme avec x une succession de plans horizontaux, les plaques forment un premier angle $\alpha$ qui se situe entre 2 et 10° et préférentiellement autour de 5° au-dessus de l'horizontale, dans le plan x,y comme représenté sur la figure 3, de telle manière que le système d'alimentation d'eau 1 formé des boîtes à eau et des lèvres de distribution est plus haut que les extrémités des plaques là où l'air est insufflé par la structure de distribution d'air. Pour une longueur typique de plaque de 1,7m, le dénivelé entre le haut et le bas de la plaque 4 est donc de l'ordre de 15 cm permettant à la vitesse de l'eau de n'être qu'environ 2 fois plus élevée en bas de la plaque que la vitesse initiale à la sortie de la lèvre de répartition 3. Cette maîtrise de l'effet de l'accélération de la pesanteur sur le film d'eau est essentiel pour maintenir un écoulement légèrement ondulé avec un nombre de Reynolds inférieur à 1000 qui définit un régime d'écoulement où les vaguelettes sont suffisamment basses sur la verticale pour qu'elles ne puissent être écrêtées par le débit d'air, évitant par là même la formation de gouttelettes et d'aérosols.

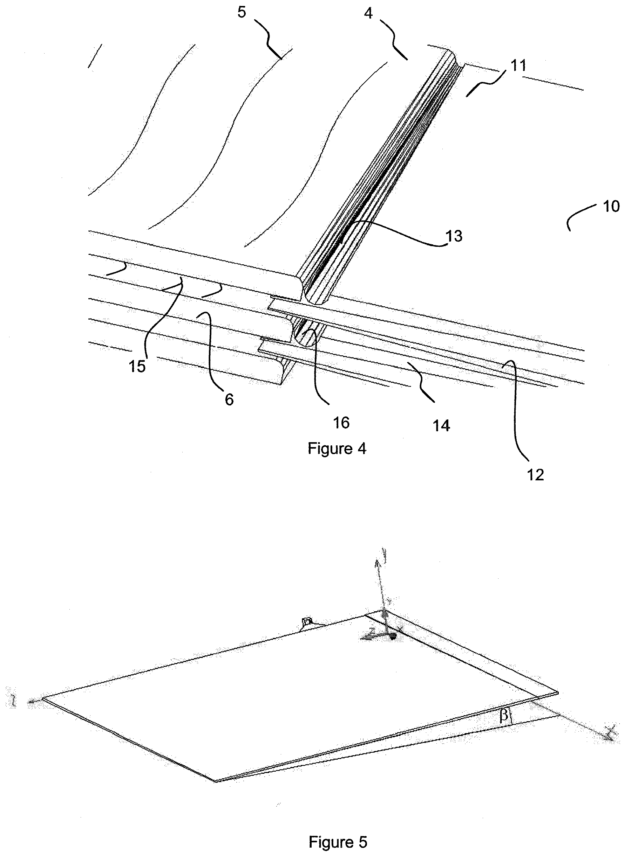

La figure 4 est une vue partielle et détaillée des extrémités des plaques 4 et 6 sur lesquelles s'écoulent les films d'eau 5 et 15 et des plaques 11 et 12 qui sont des éléments du dispositif de distribution d'air 10 à contre courant du film d'eau 5. On remarque que l'extrémité des plaques 4 et 6 est arrondie pour éviter les remous lors du changement de direction du film d'eau. La plaque 11 comprend une gouttière 13 qui recueille le débit d'eau en film 5 qui s'est écoulé sur la plaque 4. Cette gouttière peut avoir avantageusement une section croissante dans le sens de la pente y, z. En effet, comme l'indique la figure 5 les plaques forment aussi un angle $\beta$ de l'ordre de 1 à 2° sur l'horizontale cette fois dans le plan y, z. Cette pente permet de récupérer chaque débit d'eau élémentaire s'écoulant sur chaque plaque sans croiser le débit d'air évitant ainsi toute formation de gouttelettes par insufflation de l'air à travers l'écoulement d'eau. Le principe de généralisation de ce système de récupération de l'eau est montré sur la figure 4 où la plaque 14 du système de distribution d'air comporte elle aussi une gouttière 16 permettant de récupérer le débit d'eau en film 15.

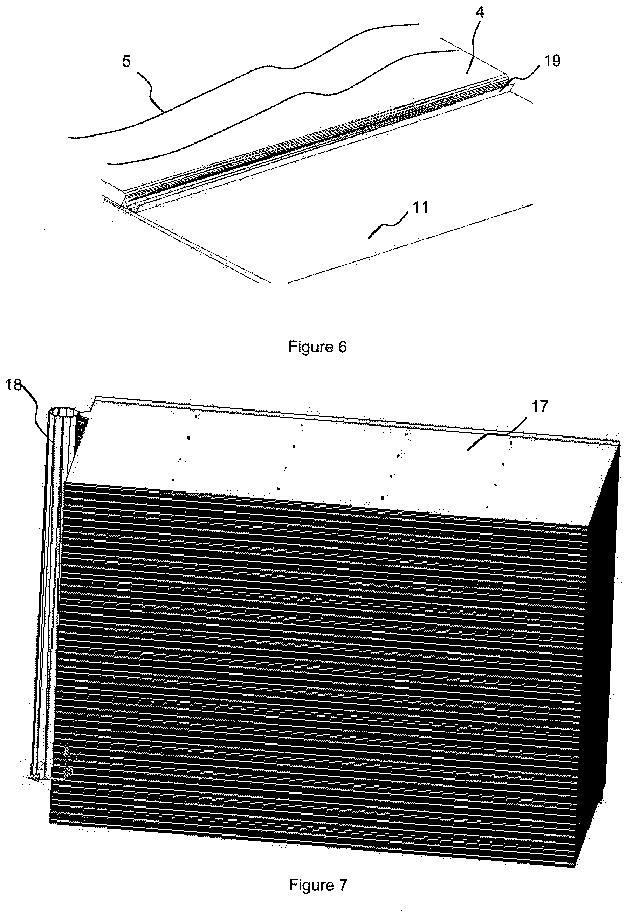

Une autre option est représentée figure 6 pour éviter que les plaques aient deux pentes l'une dans le plan x,y et l'autre dans le plan y, z, seule la pente dans le plan x,y est maintenue et une pièce 19 est rapportée sur la plaque 11 et accotée sur le bord de la surface d'échange 4. Cette pièce rapportée 19 forme une gouttière inclinée dans le plan y,z. De plus la section de la gouttière est progressivement plus large dans le sens de la pente pour tenir compte de l'accroissement du débit associé à la récupération progressive du film d'eau 5. Pour des raisons pratiques, cette gouttière 19 peut s'inscrire dans la plaque 11 elle-même en fin de parcours.

La figure 7 montre une coupe de l'ensemble des plaques formant le packing 17 avec un des tubes d'alimentation d'eau 18 qui alimente les entrées des boîtes à eau comme par exemple les entrées 7 et 8 représentées figure 2. Avantageusement plusieurs tubes non représentés, de même type que le tube 18, peuvent être mis en place pour alimenter alternativement une plaque sur deux ou une plaque sur trois ou plus si nécessaire, ce qui offrent les avantages suivants : une facilité de réalisation des piquages des entrées d'eau sur le tube d'alimentation et surtout la possibilité de réguler le débit d'eau de la tour sans modifier l'épaisseur du film. En effet, pour un débit d'eau nominal représentant 100% du débit, l'ensemble des surfaces d'échange sont alimentées par l'ensemble des tubes d'alimentation, si la tour dispose de 3 tubes d'alimentation et si le débit d'eau doit être réduit d'un tiers alors un des 3 tubes d'alimentation est fermé par une vanne ad hoc et un tiers des plaques n'est plus alimenté en eau. Les deux autres tiers sont alimentés avec le même débit unitaire que précédemment, ce qui permet de garder les mêmes paramètres de réglage des lèvres d'alimentation et donc de disposer d'un film régulier sur chacune des plaques alimentées.

En bref, l'invention concerne un système permettant de contrôler l'écoulement de films d'eau sur les parois d'échanges d'une surface d'échange d'une tour de refroidissement par l'association d'une boîte à eau et d'une lèvre de distribution assurant que le film, ou les films, soient d'une épaisseur définie et collé(s) à la paroi d'échange dès le début de son (ou de leurs) écoulement (s) et cela de manière répétitive sur chaque paroi d'échange.

Dans l'exemple, des parois d'échanges entre l'air et l'eau sont inclinées sur l'horizontale d'un angle faible, par exemple compris entre 2° et 10°, qui permet d'assurer l'écoulement de l'eau par la pesanteur et, en même temps, de limiter l'accroissement de la vitesse sur la plaque afin

- d'empêcher l'accroissement de la vitesse sur la plaque pour
- éviter l'arrachement de gouttelettes par le flux d'air.

La récupération des films d'eau s'effectue dans des gouttières de récupération perpendiculaires à l'écoulement des films d'eau sur les plaques. Ces gouttières sont inclinées sur l'horizontale d'un angle de l'ordre de, par exemple, 1° à 2° et permettent de récupérer les films d'eau sans qu'ils soient traversés par des flux d'airs.

L'air est insufflé par des buses qui s'intercalent entre les plaques d'écoulement d'eau successives de telle manière que l'air circule à contre-courant ou éventuellement à courant croisés, des films d'eau et permet ainsi l'évaporation de l'eau qui assure le refroidissement du débit d'eau sur les plaques d'échanges sans former d'aérosols liquides.


## Revendications

1. Tour de refroidissement comprenant au moins une surface d'échange (4) sur laquelle l'eau s'écoule et, pour chaque surface d'échange, un dispositif d'alimentation en eau, qui comporte un réservoir d'eau (2), **caractérisé en ce que** le dispositif d'alimentation d'eau comporte une lèvre de distribution (3) reliée au réservoir d'eau (2) et positionnée approximativement parallèle à une extrémité de la surface d'échange (4), dans lequel l'alimentation en eau s'effectue depuis le réservoir d'eau (2) à la surface d'échange (4) entre la lèvre de distribution (3) et ladite extrémité de la surface d'échange (4), et dans lequel la surface d'échange (4) est inclinée d'un angle compris entre 2° et 10° par rapport à l'horizontale pour engendrer un film d'eau (5) collé sur la surface d'échange (4).

2. Tour de refroidissement selon la revendication 1, dans laquelle, pour chaque surface d'échange (4), la distance entre la lèvre de distribution (3) et la surface d'échange (4) est entre quelques dixièmes de millimètre et un millimètre.

3. Tour de refroidissement selon l'une des revendications 1 ou 2, qui comporte une pluralité de surfaces d'échanges (4) et de dispositifs d'alimentation en eau, et des moyens pour alimenter en eau des réservoirs d'eau (2) de dits dispositif, dans lequel, pour chacun des dits réservoirs d'eau (2) alimentés en eau, un film d'eau (5) adhérant à la surface d'échange (4) est généré entre la lèvre de distribution (3) et la surface d'échange (4) avec de l'eau provenant du réservoir d'eau (2).

4. Tour de refroidissement selon la revendication 3, dans lequel les moyens pour alimenter en eau des réservoirs d'eau (2) sont configurés pour alimenter en eau un nombre de réservoirs d'eau (2) en fonction du débit d'eau dans la tour de refroidissement.

5. Tour de refroidissement selon l'une des revendications 3 ou 4, dans lequel les surfaces alimentées sont soumises chacune au même débit.

6. Tour de refroidissement selon l'une des revendications 3 à 5, qui comporte, en outre, des moyens pour générer un flux d'air à l'une des extrémités de la surface des films d'eau (5).

7. Tour de refroidissement selon la revendication 6, dans lequel le flux d'air est généré par un système de distribution d'air (10) situé à l'une des extrémités de la surface d'échange.

8. Tour de refroidissement selon l'une des revendications 3 à 7, qui comporte des gouttières inclinées (13) dans un plan perpendiculaire à l'écoulement du film d'eau (5) afin de recueillir le film d'eau (5) refroidi par évaporation sur la surface d'échange (4).

9. Tour de refroidissement selon la revendication 8, dans lequel les gouttières (13) sont inclinées d'un angle compris entre 1° à 2°, par rapport à l'horizontale.

10. Tour de refroidissement selon l'une des revendications 8 ou 9, qui comporte, en outre, pour chaque moyen pour alimenter en eau un réservoir d'eau (2), des buses d'air (10) de soufflage comportant lesdites gouttières inclinées (13).


## Patentansprüche

1. Kühlturm, zumindest eine Austauschfläche (4) umfassend, auf der das Wasser strömt, sowie für jede Austauschfläche eine Wasserzuführungsvorrichtung, die einen Wasserbehälter (2) umfasst, **dadurch gekennzeichnet, dass** die Wasserzuführungsvorrichtung eine Verteilungslippe (3) umfasst, die mit dem Wasserbehälter (2) verbunden ist, und in etwa parallel zu einem Ende der Austauschfläche (4) positioniert ist, wobei die Wasserzuführung aus dem Wasserbehälter (2) auf die Austauschfläche (4) zwischen der Verteilungslippe (3) und dem besagten Ende der Austauschfläche (4) erfolgt, und wobei die Austauschfläche (4) im Verhältnis zur Horizontalen in einem Winkel zwischen 2° und 10° geneigt ist, um einen Wasserfilm (5) zu erzeugen, der an der Austauschfläche (4) haftet.

2. Kühlturm nach Anspruch 1, wobei für jede Austauschfläche (4) die Distanz zwischen der Verteilungslippe (3) und der Austauschfläche (4) zwischen einigen Zehntel-Millimetern und einem Millimeter liegt.

3. Kühlturm nach einem der Ansprüche 1 oder 2, der eine Vielzahl von Austauschflächen (4) und von Wasserzuführungsvorrichtungen und Mittel zur Wasserzuführung zu den Wasserbehältern (2) der besagten Vorrichtungen umfasst, wobei für jeden der besagten mit Wasser versorgten Wasserbehälter (2) ein an der Austauschfläche (4) haftender Wasserfilm (5) zwischen der Verteilungslippe (3) und der Austauschfläche (4) mit dem Wasser aus dem Wasserbehälter (2) erzeugt wird.

4. Kühlturm nach Anspruch 3, wobei die Mittel zur Wasserzuführung zu den Wasserbehältern (2) konfiguriert sind, um in Abhängigkeit vom Wasserdurchfluss durch den Kühlturm eine Anzahl an Wasserbehältern (2) zu versorgen.

5. Kühlturm nach einem der Ansprüche 3 oder 4, wobei die versorgten Flächen jeweils demselben Durchfluss ausgesetzt sind.

6. Kühlturm nach einem der Ansprüche 3 bis 5, der darüber hinaus Mittel zum Erzeugen eines Luftstroms an einem der Enden der Fläche der Wasserfilme (5) umfasst.

7. Kühlturm nach Anspruch 6, wobei der Luftstrom durch ein Luftverteilungssystem (10) erzeugt wird, das sich an einem der Enden der Austauschfläche befindet.

8. Kühlturm nach einem der Ansprüche 3 bis 7, der geneigte Rinnen (13) auf einer Ebene, senkrecht zum Strom des Wasserfilms (5) umfasst, um den Wasserfilm (5) aufzufangen, der durch Verdampfen auf der Austauschfläche (4) gekühlt wird.

9. Kühlturm nach Anspruch 8, wobei die Rinnen (13) im Verhältnis zur Horizontalen in einem Winkel zwischen 1° und 2° geneigt sind.

10. Kühlturm nach einem der Ansprüche 8 oder 9, der darüber hinaus für jedes Mittel zur Wasserzuführung zu einem Wasserbehälter (2) Luftdüsen (10) umfasst, die die besagten geneigten Rinnen (13) umfassen.

fassen.

## Claims

1. Cooling tower comprising at least one exchange surface (4) on which water flows, and a water supply device comprising a water tank (2) for each exchange surface, **characterized in that** the water supply device comprises a distribution edge (3) connected to the water tank (2) and positioned approximately parallel to one extremity of the exchange surface (4), wherein the supply of water goes from the water tank (2) to the exchange surface (4) between the distribution edge (3) and said extremity of the exchange surface (4), and wherein the exchange surface (4) is inclined by 2° to 10° from horizontal to generate a water film (5) adhering to the exchange surface (4).

2. Cooling tower according to claim 1, wherein, for each exchange surface (4), the distance between the distribution edge (3) and the exchange surface (4) is between a few tenths of millimeters and one millimeter.

3. Cooling tower according to one of claims 1 or 2, that comprises a plurality of exchange surfaces (4) and of water supply devices, and means for supplying water to the water tanks (2) of said devices, wherein, for each of said water tanks (2) supplied with water, a water film (5) adhering to the exchange surface (4) is generated between the distribution edge (3) and the exchange surface (4) by water from the water tank (2).

4. Cooling tower according to claim 3, wherein the means for supplying water to the water tanks (2) are configured to supply water to a number of water tanks (2) depending on the flow rate of water in the cooling tower.

5. Cooling tower according to one of claims 3 or 4, wherein the supplied surfaces are subjected to the same flow rate.

6. Cooling tower according to one of claims 3 to 5, that further comprises means for generating an air flow at one of the extremities of the surface of the water films (5).

7. Cooling tower according to claim 6, wherein the air flow is generated by an air distribution system (10) located at one of the extremities of the exchange surface.

8. Cooling tower according to one of claims 3 to 7, that comprises inclined gutters (13) in a plane perpendicular to the flow of the water film (5) so as to collect the water film (5) cooled by evaporation on the exchange surface (4).

9. Cooling tower according to claim 8, wherein the gutters (13) are inclined by an angle of 1° to 2° from horizontal.

10. Cooling tower according to one of claims 8 or 9, that further comprises, for each means for supplying water to a water tank (2), nozzles for blowing air (10) comprising said inclined gutters (13).

Figure 1

Figure 2

Figure 3

Figure 4

Figure 5

Figure 6

Figure 7

**EP 1 756 504 B1**

**RÉFÉRENCES CITÉES DANS LA DESCRIPTION**

**Documents brevets cités dans la description**

- US 3731461 A
- GB 2206683 A
- US 4579692 A
- WO 9930096 A
- WO 9421366 A
- US 2517639 A
- US 3652066 A